# EUROPEAN PATENT SPECIFICATION

(11) **EP 1 781 944 B1**
(45) Date of publication and mention of the grant of the patent: **23.07.2014**
(21) Application number: 05750693.3
(22) Date of filing: 20.05.2005
(51) Int. Cl.: F03B 3/04, F03B 3/18, F03B 15/14, F03B 17/06

(54) **HYDROELECTRIC TURBINE WITH COLLAPSILE SHROUD**
HYDROELEKTRISCHE TURBINE MIT ZUSAMMENKLAPPBAREM DECKBAND
TURBINE HYDROELECTRIQUE DOTEE D'UNE ENVELOPPE PLIABLE

(30) Priority: 25.05.2004 US 852481
(43) Date of publication of application: 09.05.2007
(73) Proprietor: OpenHydro Group Limited, Dublin 2 (IE)
(72) Inventor: Williams, Herbert, L., East Palatka, FL 32131 (US)
(74) Representative: O'Neill, Brian
(86) International application number: PCT/US2005/017739
(87) International publication number: WO 2005/116443

(56) References cited:
- WO-A2-03/025385
- DE-A1- 10 028 890
- US-A- 2 054 142
- US-A- 4 025 220
- US-A- 4 868 408
- US-B1- 6 409 466

## Description

### BACKGROUND OF THE INVENTION

This invention relates generally to the field of hydroelectric turbines, where a water stream is passed through a rotating turbine to produce electricity. More particularly, the invention relates to such devices where the flow of water through the turbine is controllable by water flow control means.

One of the problems inherent in a low head (run of the river, tidal, etc.) turbine for producing electricity is the relatively slow water velocity; usually from 1 to 5 knots. Using a venturi device, a conical device having a larger forward opening than rear opening, to increase the velocity of water flow into and through a hydroelectric turbine is known. Such venturi devices are typically constructed of a rigid material such as metal or concrete, with gates provided to control the water flow into the turbine. This ability to increase low head water velocities to those of high head applications has inherent advantages of cost, size, efficiency and overall maintainability. Since horsepower output is on an exponential curve with water velocity, it is expedient to keep the blade diameter as small as possible to reach the goal power output. The turbines are typically mounted in a fixed manner due to their size and weight. Such prior art turbines can be found in US 4025 220, WO03/025385A2 or DE 10038890A1.

It is an object of this invention to provide a hydroelectric turbine wherein the venturi is a conical shroud composed of a flexible and collapsible material, and wherein water flow into the turbine is controlled by closing the forward opening of the shroud. It is a further object to provide such a turbine that is relatively lightweight such that it can be positioned in a flowing stream of water using a flotation chamber. It is a further object to provide such a turbine wherein the forward opening of the shroud is controlled by a draw line that easily closes and opens the forward opening.

The embodiment has the following aspects which the inventor believes are new:
1) The front shroud is collapsible on demand.
2) The front shroud can be pursed (drawn) together to stop water from flowing through it and the turbine.
3) The purse line can be released to allow water to flow through the front shroud and turbine.
4) The turbine is a combination of a flexible front and a rigid rear shroud used together as one unit.
5) The flotation chamber is used to position the turbine during operation and to raise the turbine to the surface to be serviced.

### SUMMARY OF THE INVENTION

The invention is a hydroelectric turbine wherein water flow is used to cerate electricity, the turbine comprising a venturi device comprised of a forward shroud composed of a flexible and collapsible material, whereby the flow of water into and through the turbine is accelerated by the tapered conical shape of the shroud, the front opening of the shroud being larger than the rear opening, and wherein water flow into the turbine can be stopped completely by closing the forward opening of the shroud. In the preferred embodiment, a draw line is passed through purse rings disposed on the forward opening of the shroud, such that the shroud is closed by drawing or pursing the draw line to bring the purse rings together. Release of the draw lines allows the shroud to open. A rear shroud also of conical shape but having its rear opening larger than its forward opening is also provided.

The turbine and shroud combination is joined to a flotation chamber by multiple cables extending from the purse rings. The flotation chamber is anchored to maintain the turbine in a generally stationary position relative to the water flow. The height of the flotation chamber and the turbine is controllable. The flotation chamber can be used to bring the turbine to the surface of the water for servicing when the front shroud is closed.

### BRIEF DESCRIPTION OF THE DRAWINGS

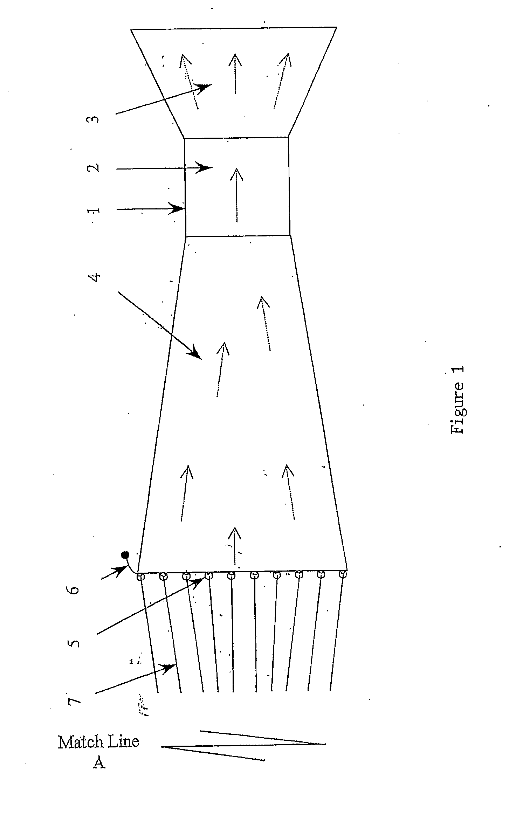

Figure 1 shows the front and rear shroud with the turbine section between. The cables to the flotation chamber are cut at match line (A).

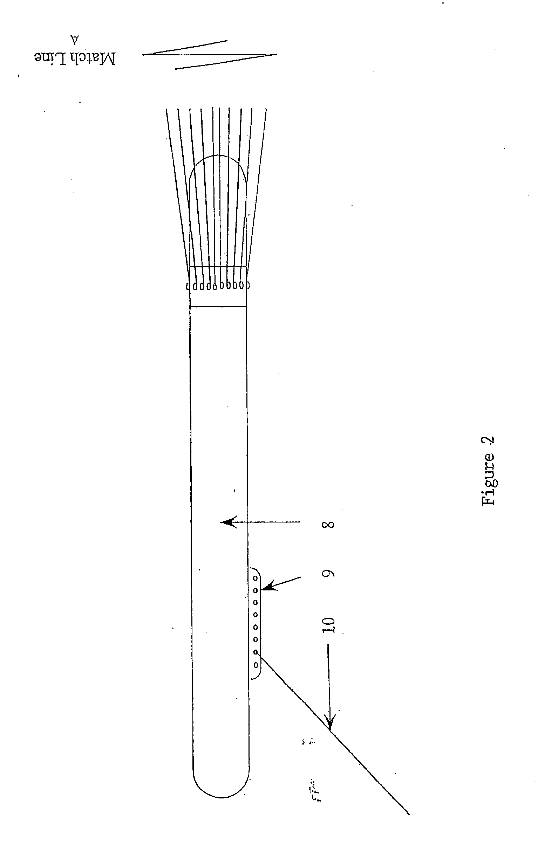

Figure 2 shows the flotation chamber with anchor line (10). The cables to the shroud are cut at match line (A).

### DETAILED DESCRIPTION OF THE INVENTION

With reference to the drawings, the invention will now be described with regard for the best mode and the preferred embodiment. In general, the invention is a hydroelectric turbine having a front shroud (4) composed of a flexible and collapsible material, the front shroud (4) having means to close its forward opening to stop flow of water to the turbine, referred to herein as turbine housing (1).

As the water flows through front shroud (4), its velocity and pressure increases. When the flow enters turbine housing (1), it has reached maximum velocity and pressure. It is in the area (2) that the work is being done of rotating the turbine blades. As the water passes through the rear shroud (3), which is preferably composed of a rigid material, its velocity and pressure is decreased continually until it merges again with the outside flow.

A plurality of purse rings (5) are disposed on the forward opening of the front shrough (4). The draw line (6) which passes through all the purse rings (5) and is attached at one end to the front of the shroud (4) has the ability when pulled, to purse (draw together) the purse rings (5) and stop the water flow through the turbine. When the draw line (6) is released, the shroud (4) will again open, allowing water to pass through the turbine. The cable (7) attaches the front shroud (4) to the flotation chamber (8).

The scope angle adjustment (9) is where the anchor line (10) is attached to the flotation chamber (8). By adjusting the attachment point of the anchor line (1) fore or aft, the scope angle can be altered, thereby altering the floating height by raising or lowering the flotation chamber (8) and the turbine.

The embodiment is designed to be pulled below the water surface by the increased amount of drag created when the turbine is operating. When the turbine is switched off or the front shroud (4) is pursed, drag will decrease and the entire embodiment will float to the surface of the water body.

## Claims

1. A hydroelectric turbine comprising: a turbine housing (1); and a front shroud (4) connected to said turbine housing (1), said front shroud (4) directing water flow into said turbine housing (1); wherein said front shroud (4) is composed of a flexible and collapsible material, and further wherein said front shroud (4) can be collapsed to stop water flow into said turbine housing (1); further comprising a flotation chamber (8) secured by an anchor line (10), and **characterized in that** the floating height of said flotation chamber (8) and said turbine can be altered by adjusting the attachment point of said anchor line (10).

2. The turbine of claim 1, wherein said front shroud (4) has a forward opening and a rear opening, and wherein said forward opening is larger than said rear opening.

3. The turbine of claim 2, wherein said front shroud (4) is tapered.

4. The turbine of claim 3, wherein said front shroud (4) is generally circular in crosssection.

5. The turbine of claim 2, wherein said front shroud (4) further comprises a draw line (6) connected to said forward opening, whereby said front shroud (4) is collapsed by closing said forward opening with said draw line (6).

6. The turbine of claim 1, further comprising a rear shroud (3).

7. The turbine of claim 6, wherein said rear shroud (3) is composed of a rigid material.

8. The turbine of claim 1, wherein said flotation chamber (8) is connected to said front shroud (4).

9. The turbine of claim 5, further comprising purse rings (5) mounted on said forward opening, wherein said draw line (6) passes through said purse rings (5).

## Patentansprüche

1. Hydroelektrische Turbine, die Folgendes umfasst: ein Turbinengehäuse (1); und ein vorderes Deckband (4), das mit dem Turbinengehäuse (1) verbunden ist, wobei das vordere Deckband (4) Wasserströmung in das Turbinengehäuse (1) lenkt; wobei das vordere Deckband (4) aus einem biegsamen und faltbaren Material gebildet ist und wobei weiter das vordere Deckband (4) zusammengefaltet werden kann, um die Wasserströmung in das Turbinengehäuse (1) zu blockieren; weiter umfassend eine Auftriebskammer (8), die durch eine Ankerleine (10) befestigt ist, und **dadurch gekennzeichnet, dass** die Schwimmhöhe der Auftriebskammer (8) und der Turbine durch Verstellen der Anbringstelle der Ankerleine (10) geändert werden können.

2. Turbine nach Anspruch 1, wobei das vordere Deckband (4) eine Öffnung nach vorne und eine hintere Öffnung aufweist und wobei die Öffnung nach vorne größer ist als die hintere Öffnung.

3. Turbine nach Anspruch 2, wobei das vordere Deckband (4) verjüngt ist.

4. Turbine nach Anspruch 3, wobei das vordere Deckband (4) einen allgemein kreisförmigen Querschnitt aufweist.

5. Turbine nach Anspruch 2, wobei das vordere Deckband (4) weiter eine Zugleine (6) umfasst, die mit der Öffnung nach vorne verbunden ist, wodurch das vordere Deckband (4) zusammengefaltet wird, indem die Öffnung nach vorne mit der Zugleine (6) geschlossen wird.

6. Turbine nach Anspruch 1, weiter umfassend ein hinteres Deckband (3).

7. Turbine nach Anspruch 6, wobei das hintere Deckband (3) aus einem starren Material gebildet ist.

8. Turbine nach Anspruch 1, wobei die Auftriebskammer (8) mit dem vorderen Deckband (4) verbunden ist.

9. Turbine nach Anspruch 5, weiter umfassend Schnürringe (5), die an der Öffnung nach vorne montiert sind, wobei die Zugleine (6) durch die Schnürringe (5) läuft.

## Revendications

1. Turbine hydroélectrique comportant : un carter de turbine (1) ; et une enveloppe avant (4) raccordée audit carter de turbine (1), ladite enveloppe avant (4) dirigeant l'écoulement d'eau dans ledit carter de turbine (1) ; dans laquelle ladite enveloppe avant (4) est constituée d'une matière souple et pliable, et par ailleurs dans laquelle ladite enveloppe avant (4) peut être pliée pour interrompre l'écoulement d'eau dans ledit carter de turbine (1) ; comportant par ailleurs une chambre de flottaison (8) assujettie par un câble d'ancrage (10), et **caractérisée en ce que** la hauteur de flottaison de ladite chambre de flottaison (8) et de ladite turbine peut être modifiée en ajustant le point d'attache dudit câble d'ancrage (10).

2. Turbine selon la revendication 1, dans laquelle ladite enveloppe avant (4) a une ouverture avant et une ouverture arrière, et dans laquelle ladite ouverture avant est plus grande que ladite ouverture arrière.

3. Turbine selon la revendication 2, dans laquelle ladite enveloppe avant (4) est conique.

4. Turbine selon la revendication 3, dans laquelle ladite enveloppe avant (4) est généralement circulaire en coupe transversale.

5. Turbine selon la revendication 2, dans laquelle ladite enveloppe avant (4) comporte par ailleurs un câble de traction (6) raccordé à ladite ouverture avant, ce par quoi ladite enveloppe avant (4) est pliée par la fermeture de ladite ouverture avant au moyen dudit câble de traction (6).

6. Turbine selon la revendication 1, comportant par ailleurs une enveloppe arrière (3).

7. Turbine selon la revendication 6, dans laquelle ladite enveloppe arrière (3) est constituée d'une matière rigide.

8. Turbine selon la revendication 1, dans laquelle ladite chambre de flottaison (8) est raccordée au niveau de ladite enveloppe avant (4).

9. Turbine selon la revendication 5, comportant par ailleurs des anneaux de coulisse (5) montés sur ladite ouverture avant, dans laquelle ledit câble de traction (6) passe au travers desdits anneaux de coulisse (5).
